## Europäisches Patentamt

## European Patent Office

## Office européen des brevets

(19)

(11) Veröffentlichungsnummer: **0 130 502**
**B1**

(12) **EUROPÄISCHE PATENTSCHRIFT**

(45) Veröffentlichungstag der Patentschrift:
**18.05.88**

(21) Anmeldenummer: **84107195.4**

(22) Anmeldetag: **22.06.84**

(51) Int. Cl.⁴: **F 24 J 2/26,** F 24 J 2/04,
F 25 C 3/02

(54) Verwendung eines Wärme- und Kältetauschers.

(30) Priorität: **22.06.83 AT 2290/83**

(43) Veröffentlichungstag der Anmeldung:
**09.01.85 Patentblatt 85/2**

(45) Bekanntmachung des Hinweises auf die Patenterteilung:
**18.05.88 Patentblatt 88/20**

(84) Benannte Vertragsstaaten:
**BE CH DE FR GB IT LI NL SE**

(56) Entgegenhaltungen:
DE-A-2 638 495
DE-A-3 146 545

PATENT ABSTRACTS OF JAPAN, Band 7, Nr. 116
(M-216) 1261 , 20. Mai 1983; & JP - A - 58 035 357
(MATSUSHITA DENKI SANGYO) 02.03.1983
SOLAR ENERGY TECHNOL. HANDBOOK, Part. A,
p. 220

(73) Patentinhaber: **Solkav Solartechnik GmbH,**
**Industriegebiet- Nord, A-3150 Wilhelmsburg (AT)**

(72) Erfinder: **Elahi, Kaveh Hakim, Traisen (AT)**
Erfinder: **Janisch, Herbert, Traisen (AT)**

(74) Vertreter: **Weber, Otto Ernst, Dipl.- Phys.,**
**Hofbrunnstrasse 36, D-8000 München 71 (DE)**

EP 0 130 502 B1

## Beschreibung

Die Erfindung bezieht sich auf die Verwendung eines großflächigen, flachen Wärmetauschers gemäß Oberbegriff des Anspruches 1.

Ein Wärmetauscher der vorgenannten Art ist aus der DE-A-31 46 545 bekannt. Dieser bekannte Wärmetauscher hat zwar zwei voneinander getrennte Kanalsysteme, wobei deren Strömungskanäle parallel zueinander angeordnet sind. Die Verwendung dieses Wärmetauschers ist jedoch allein für Heizzwecke, z. B. zur Beheizung von Schwimmbädern oder zur Warmwasserbereitung, vorgesehen. Für Kunsteisbahnen ist es weiterhin bekannt, Rohre in Beton einzugießen und mit einem Kälteträgermedium, z. B. einer Sole, zu beschicken, wobei diese Betonoberfläche horizontal liegen muß, um eine gleichmäßige Eisdicke zu erlangen. Unter Berücksichtigung des vorgenannten Standes der Technik liegt daher der Erfindung die Aufgabe zugrunde, einen gattungsgemäßen großflächigen Wärmetauscher für unterschiedliche Nutzungsmöglichkeiten bereitzustellen, wobei eine ganzjährige Nutzung damit eröffnet wird.

Diese Aufgabe wird erfindungsgemäß bei einem gattungsgemäßen Wärmetauscher durch die Merkmale des kennzeichnenden Teils des Anspruches 1 gelöst.

Die Erfindung bietet somit den Vorteil, mit ein und demselben Wärmetauscher im Sommer Warmwasser, z. B. für die Beheizung eines Schwimmbades, und im Winter eine ebene, horizontale Eisfläche, z. B. eine Eisbahn, zu erzeugen. Hierdurch wird einerseits eine ganzjährige Nutzung der horizontalen Fläche des Wärmetauschers erzielt und andererseits eine erhebliche Kostenersparnis durch den Wegfall eines gesonderten, zur Eiserzeugung dienenden Wärmetauschers erreicht.

Zweckmäßigerweise können die Strömungskanäle der Strömungskreise des Wärmetauschers gruppenweise getrennt beschickbar sein, wobei die eine Gruppe der Strömungskanäle vom Wärmeträgermedium und die andere Gruppe der Strömungskanäle vom Kälteträgermedium durchflossen ist, und zwar je nach Bedarf nur die eine Gruppe oder die andere Gruppe. Zur Erzielung einer besonders gleichmäßigen Flächenausnützung, insbesondere bei der Eisflächenerzeugung, kann die eine Gruppe durch die Strömungskanäle mit gradzahliger Folgenummer und die zweite Gruppe durch die Strömungskanäle mit ungradzahliger Folgenummer gebildet sein.

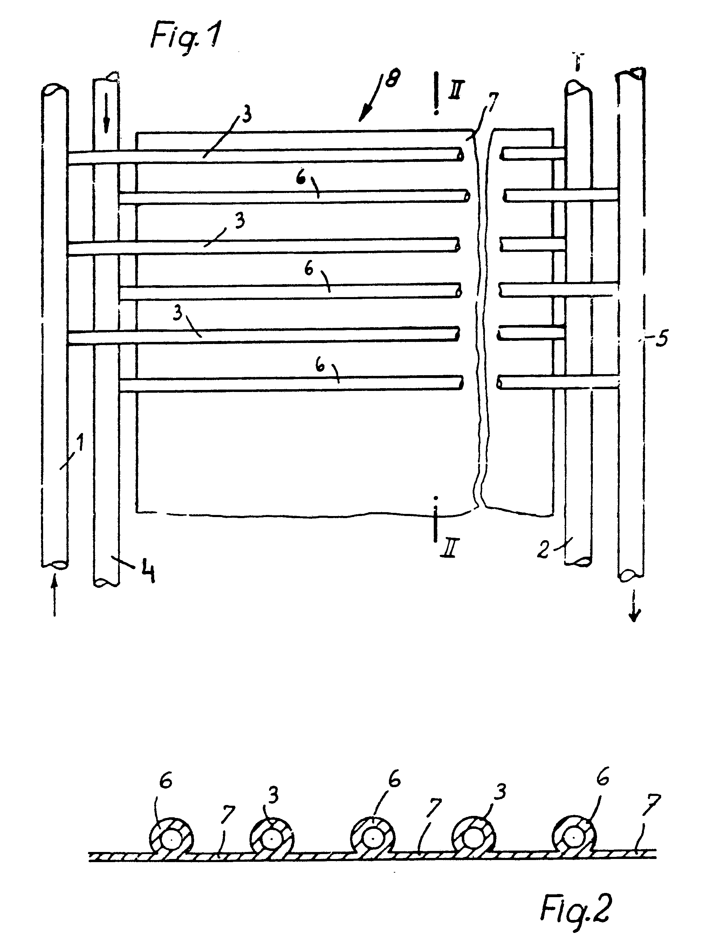

Fig. 1 zeigt schematisch einen Wärme- und Kältetauscher zur Verwendung bei der Erfindung; Fig. 2 ist ein Schnitt nach Linie II-II der Fig. 1.

Mit 1 ist die Zuleitung für das Wärmeträgermedium zur Gewinnung von Wärmeenergie und mit 2 die Ableitung für das durch Sonnenenergie erwärmte Wärmeträgermedium bezeichnet, wobei das Wärmeträgermedium durch durch Schläuche oder Rohre gebildete Strömungskanäle 3 fließt. 4 ist die Zuleitung für das Kälteträgermedium, z. B. Sole, und 5 die Ableitung für dasselbe, wobei diese beiden Leitungen 4 und 5 durch gleichfalls durch Schläuche oder Rohre gebildete Strömungskanäle 6 miteinander verbunden sind. Wie aus Fig. 2 ersichtlich, stehen die die Strömungskanäle 3, 6 bildenden Schläuche durch parallel zur Längsachse verlaufende, etwa tangential außen angebrachte Stege 7 mechanisch in Verbindung, so daß sich ein mattenförmiger und frostsicherer Wärmetauscher 8 ergibt.

Die Leitungen 1 und 2 sind an einem Wärmekreislauf zur Bereitung von Warmwasser, z. B. Wasser eines Schwimmbades angeschlossen, wobei in diesem Fall das Schwimmbadwasser zur Erwärmung direkt, also ohne Zwischenwärmeträger, durch den Wärmetauscher geschickt werden kann.

Die Leitungen 4 und 5 stehen mit dem Kältekreislauf einer Kältemaschine in Verbindung und werden von letzterer mit kaltem Kälteträgermedium, z. B. unterkühlter Sole, beschickt.

Im Sommer wird dabei nur der Wärmekreislauf über die Leitungen 1 und 2 betrieben, wobei der Kältekreislauf stillgelegt ist, im Winter hingegen nur der Kältekreislauf über die Leitungen 4 und 5, wobei dann der Wärmekreislauf stillgelegt ist. Da die vom Kälteträgermedium durchströmten Kanäle 6 direkt in der zu frierenden Wasserschicht bzw. in der gebildeten Eisschicht liegen, ist ein besonders rascher und verlustfreier Wärmeübergang erzielt.

## Patentansprüche

1. Verwendung eines großflächigen, flachen Wärmetauschers mit zwei voneinander getrennten Kanalsystemen, die jeweils mindestens eine Zuleitung und eine Ableitung für Strömungsmittel sowie die Zu- und Ableitung verbindenden Strömungskanäle für das jeweilige Strömungsmittel aufweisen, wobei die Strömungskanäle parallel zueinander verlaufen, dadurch <u>gekennzeichnet,</u> daß die Strömungskanäle auf einer horizontalen Fläche angeordnet werden, daß während der ersten Nutzungsperiode das erste Kanalsystem mit einem Wärmeträger-Strömungsmittel beschickt wird, das zur Beheizung verwendet wird, und daß während einer zweiten Nutzungsperiode Wasser so auf die horizontale Fläche aufgebracht wird, daß die Strömungskanäle direkt in der Wasserschicht liegen und das zweite Kanalsystem mit einem Kälteträgermedium, z. B. einer Sole, zum Wärmeentzug und damit Gefrieren des Wassers zur Erzeugung einer Eisfläche durchströmt wird.

2. Verwendung eines Wärmetauschers nach Anspruch 1,

dadurch <u>gekennzeichnet</u>,
daß in der ersten Nutzungsperiode die Strömungskanäle (3) mit geradzahliger Folgenummer und in der zweiten Nutzungsperiode die Strömungskanäle (6) mit der ungeradzahligen Folgenummer von entsprechendem Strömungsmedium durchflossen werden.

## Claims

1. Use of a large area , flat heat exchanger with two separate duct systems, having in each case at least one supply line and one discharge line for flow media, as well as flow ducts for the particular flow medium interconnecting the supply and discharge lines, the flow ducts running parallel to one another, characterized in that the flow ducts are arranged on a horizontal surface, that during the first usage period the first duct system is supplied with a heat transfer flow medium used for heating purposes and that during a second usage period water is so applied to the horizontal surface that the flow ducts are directly located in the water layer and through the second duct system flows a refrigerant medium, e. g. salt water for heat extraction and therefore for freezing the water for producing an ice surface.

2. Use of a heat exchanger according to claim 1, characterized in that a corresponding flow medium flows through the flow ducts (3) with an even number during the first usage period and through the flow ducts (6) with the uneven number during the second usage period.

## Revendications

1. Utilisation d'un échangeur de chaleur plat et de grande surface, ayant deux systèmes de canaux séparé l'un de l'autre, chacun comprenant au moins un conduit d'entrée et un conduit de sortie pour les fluides ainsi que des canaux d'écoulement interconnectant les conduits d'entrée et de sortie pour chaque fluide, les canaux d'écoulement s'étendant de façon parallèle l'un à l'autre, caractérisé en ce que les canaux d'écoulement sont arrangés sur une surface horizontale, en ce que pendant une première période d'exploitation, le premier système de canaux est alimenté avec un fluide-porteur de chaleur, qui est utilisé pour l'échauffement, et en ce que pendant une deuxième période d'exploitation, on applique de l'eau sur la surface horizontale d'une façon telle que les canaux d'écoulement se trouvent directement dans une couche d'eau alors que le deuxième système de canaux est traversé par une saumure agissant pour l'enlèvement de chaleur et, par conséquent, pour la congélation de l'eau afin de produire une surface en glace.

2. Utilisation d'un échangeur de chaleur selon la revendication 1, caractérisée en ce que sont traversés par les fluides respectifs pendant une première période d'exploitation les canaux d'écoulement (3) portant un numéro pair et pendant une deuxième période d'exploitation les canaux d'écoulement (6) portant un numéro impair.

Fig. 1

Fig. 2